# FASCICULE DE BREVET EUROPEEN

(11) **EP 2 521 703 B1**
(45) Date de publication et mention de la délivrance du brevet: **28.12.2016**
(21) Numéro de dépôt: 11704250.7
(22) Date de dépôt: 04.01.2011
(51) Int. Cl.: C05B 1/02, C05B 1/04, C05B 11/04, C05B 17/00

(54) **COMPOSÉS PHOSPHATÉS ET LEUR UTILISATION EN TANT QU'ENGRAIS**
PHOSPHATVERBINDUNGEN UND IHRE VERWENDUNG ALS DÜNGEMITTEL
PHOSPHATE COMPOUNDS AND USE THEREOF AS FERTILISER

(30) Priorité: 04.01.2010 FR 1050009
(43) Date de publication de la demande: 14.11.2012
(73) Titulaire: Agro Innovation International, 35400 Saint-Malo (FR)
(72) Inventeur: ERRO, Javier, E-31008 Pamplona (ES); BAIGORRI, Roberto, E-31620 Huarte/uharte (ES); GARCIA-MINA, José, E-31170 Iza (ES); YVIN, Jean-Claude, F-35400 Saint Malo (FR)
(74) Mandataire: Gillet, Raphaëlle
(86) Numéro de dépôt international: PCT/FR2011/050011
(87) Numéro de publication internationale: WO 2011/080496

(56) Documents cités:
- BE-A- 472 862
- FR-A- 591 851
- FR-A- 945 961
- US-A- 620 443
- US-A- 1 048 454
- US-A- 1 668 464
- MATSUMOTO YOSHIO: "Manufacture of soil amendments by treating humus and phosphorus ores with inorganic acids", CHEMICAL ABSTRACTS, vol. 115, 9 avril 1991 (1991-04-09), XP000861202, ISSN: 0009-2258
- YUE, TINGSHENG; MA, PEILAN: "study on humic compound fertilizers of nitrogen and phosphorus", CHEMICAL ABSTRACTS, vol. 130, 1998, XP000186795, ISSN: 0009-2258

## Description

La présente invention concerne des composés phosphatés ainsi que leur utilisation en tant qu'engrais dans le domaine agronomique.

Le phosphore est un macronutriment important pour les plantes qui peut représenter jusqu'à 0,2 % de la matière sèche.

C'est un composant de molécules clefs telles que les acides nucléiques, les phospholipides et l'ATP. Le phosphore inorganique est également impliqué dans le contrôle de diverses réactions enzymatiques ainsi que dans la régulation de nombreuses voies métaboliques.

Par conséquent, les plantes ne peuvent se développer sans un apport minimum en phosphore.

Après l'azote, le phosphore est le second macronutriment le plus fréquemment limitant pour la croissance des plantes.

Même si dans un sol la concentration totale en phosphore est généralement importante, il est souvent présent sous des formes non disponibles, ou sous des formes qui ne sont disponibles qu'en dehors de la rhizosphère. En général, ces formes sont des phosphates de fer et des phosphates d'aluminium dans les sols acides, et des phosphates de calcium dans les sols calcaires.

En l'absence de fertilisation, le re-largage rapide de phosphore dans les sols est très souvent insuffisant pour supporter le développement de plantes agronomiques. Dans les sols fertilisés, plus de 80 % du phosphore se retrouve immobilisé et non disponible pour les plantes, à cause de son adsorption, de sa précipitation et/ou de sa conversion sous forme organique.

De nombreuses études ont mentionné l'étroite relation entre la biodisponibilité du phosphore dans les sols et la concentration en matière organique du sol (MOS). D'autres études ont montré le bénéfice des amendements organiques (AO) à la fois pour la disponibilité du phosphore et son absorption par la plante dans différents types de sols.

La matière organique du sol (MOS) et les amendements organiques (AO) agissent sur la dynamique phosphore du sol notamment par l'augmentation des activités microbienne et enzymatique du sol mais d'autres mécanismes plus directs des MOS et AO peuvent également jouer un rôle important dans leur action sur la dynamique du phosphore du sol.

Ainsi, l'efficacité des mélanges de phosphate et de matière organique pour améliorer la disponibilité du phosphore est à l'origine de nombreux travaux. Par exemple, différents documents brevet décrivent le mélange d'engrais phosphatés, principalement des superphosphates, avec des matières organiques ou des substances humiques (US 3617237 ; US 7001869, RU 2108996 ; CN1212249 ; BE 472 862 ; FR 945 961).

En général, ces documents décrivent un mélange physique des matières organiques ou des substances humiques avec des engrais phosphatés qui sont déjà préparés, préalablement à ce mélange.

Ces mélanges possèdent certes des effets bénéfiques sur la disponibilité du phosphore mais ils ne sont pas entièrement satisfaisants. En effet, parmi les différents mécanismes qui permettent de protéger le phosphore de la rétrogradation dans les sols, la formation de complexes phospho-organiques stables représente l'un des plus efficaces. Or, les engrais phosphatés décrits dans l'art antérieur ne sont pas réellement constitués par de tels complexes et agissent par d'autres mécanismes qui sont indirects et donc moins efficaces (Delgado, A. et al., 2002, Plant Soil, 245, 277-286).

Par ailleurs les brevets US 1 668 464, US 1 048 454 et US 620 443 décrivent un procédé de fabrication d'engrais phosphaté dans lequel on mélange des roches phosphatées, un acide et une matière organique brute.

C'est dans ce contexte que les Inventeurs se sont fixé comme objectif de préparer des composés phosphatés qui permettent de fournir du phosphore avec une disponibilité améliorée.

D'une manière générale, les engrais phosphatés sont produits par addition d'acide(s) sur une source de phosphate insoluble (se présentant généralement sous la forme de roches phosphatées broyées ou pulvérisées).

En fonction de l'acide ou mélange d'acides utilisé, différents engrais phosphatés sont obtenus :
- si de l'acide sulfurique est utilisé, il y a formation de composés dits superphosphates simples ou normaux (SSP) qui se caractérisent par une teneur en P₂O₅ de 16 à 22 % ;
- si de l'acide phosphorique est utilisé, il y a formation de composés dits triple superphosphates (TSP), qui contiennent de 43 à 48 % de P₂O₅ ;
- si un mélange d'acide sulfurique et d'acide phosphorique est utilisé, des engrais phosphatés dits double superphosphates (DSP) sont obtenus qui contiennent de 28 % à 35 % en P₂O₅.

D'autres acides peuvent également être utilisés, mais de façon moins fréquente. Il s'agit par exemple de l'acide nitrique qui conduit à la formation de nitro-phosphates.

Les Inventeurs ont découvert, de façon inattendue, que la présence de composés complexants extraits à partir de matière organique, et en particulier la présence de substances humiques, lors de la réaction d'attaque acide d'une source de phosphate insoluble permet d'obtenir des composés phosphatés dans lesquels le phosphate reste soluble même s'il est concentré.

Dans les composés préparés selon l'invention, le phosphate est présent sous une forme qui est directement disponible et utilisable par les plantes. Ainsi, les composés phosphatés préparés selon l'invention contiennent du phosphate protégé de la rétrogradation. L'invention trouve donc une application toute particulière pour la préparation d'engrais phosphatés qui sont préparés par attaque acide d'une source de phosphate insoluble.

Les Inventeurs ont en effet montré que l'avantage principal des composés organo-phosphatés préparés selon l'invention réside dans le fait que le procédé utilisé permet la formation de complexes organo-calcium-phosphate stables. Ces complexes sont des associations supramoléculaires composés de macromolécules organiques qui sont liées au phosphate par la formation de ponts calciques. Ainsi, la présence d'entités organiques complexantes permet de protéger le phosphate de la précipitation par formation de sels insolubles dans l'eau avec le fer, l'aluminium ou le calcium.

Le document CN 1223986-1999 décrit la réaction simultanée de roches phosphatées avec l'acide sulfurique et un résidu organique riche en lysine (produit issu de la fabrication de lysine). Cependant, du fait de la présence importante de lysine et d'analogues d'amine dans le résidu organique utilisé dans la réaction, le groupe amine terminal forme des ponts (ou amides) avec les groupes carboxyliques de la matière organique, ce qui bloque les sites de complexation et empêche la formation de complexes organo-calcium-phosphate (ceci est décrit par Terashima et a/., 2007, Chemosphere, 69, 240-246).

La présente invention est mise en oeuvre pour la préparation de composés phosphatés à partir d'une source insoluble de phosphore et de préférence de roches phosphatées. Par exemple, l'invention permet l'obtention de composés phosphatés tels que les nitro-phosphates, les superphosphates simples, doubles ou triples.
Selon un premier aspect, la présente invention a donc pour objet un procédé de préparation de composés phosphatés comprenant les étapes suivantes :
a) activation d'une matière organique brute choisie parmi la lignite, la léonardite, la tourbe, les composts végétaux, les lignosulfonates ne contenant pas de cations monovalents et les algues, ladite activation étant réalisée par réaction de :
   (i) 70% à 98% en poids, de préférence 80% à 95% en poids, d'acide minéral ou organique, avec
   (ii) 2% à 30% en poids, de préférence 5% à 20% en poids de matière organique brute, la somme de (i) et (ii) étant égale à 100%,
      de façon à libérer au moins 10%, de préférence au moins 30% de groupes fonctionnels complexants présents dans ladite matière organique brute ; et
b) réaction de
   (i) 30% à 50% en poids, de préférence de 35% à 45% en poids, d'une source de phosphate insoluble, avec
   (ii) 50% à 70% en poids, de préférence 55% à 65% en poids, de matière organique brute activée par un acide, la somme de (i) et (ii) étant égale à 100%.

Dans les composés obtenus selon ce procédé de préparation, le phosphate est protégé de la rétrogradation du fait de la formation de complexes organo-calcium-phosphate stables qui ne peuvent pas être obtenus si les composés organiques à capacité complexante ne sont pas préalablement traités pour libérer les groupes fonctionnels complexants présents dans la matière organique utilisée. Dans ces complexes organo-calcium-phosphate, le phosphate est protégé notamment de la réaction avec le fer, l'aluminium ou le calcium par exemple qui conduit à la synthèse de composés phosphatés qui précipitent et qui sont non-utilisables directement par les plantes.

Selon la présente invention, on entend par groupes fonctionnels complexants tout groupe fonctionnel apte à former des complexes avec les métaux. Ces groupes fonctionnels complexants sont des groupes carboxyliques, phénoliques et hydroxyliques par exemple.

Le nombre ou la proportion de groupes fonctionnels complexants libres peut être mesuré(e) par différentes techniques bien connues de l'homme du métier, comme par exemple par potentiométrie ou par gravimétrie. Par exemple, les groupes fonctionnels complexants carboxyliques peuvent être dosées par la méthode potentiométrique qui permet de déterminer, par exemple l'acidité libre résiduelle de composés organiques en solution correspondant à l'acidité titrable par l'hydroxyde de sodium jusqu'au pH du point équivalent. Elle est obtenue en traçant la courbe de titration de ladite solution organique par une solution titrée d'hydroxyde de sodium et en déterminant a partir de cette courbe le volume équivalent de solution titrante. Cette méthode est notamment décrite par Dr. William Horwitz et Dr. George Latimer, dans « The 18th Edition, Revision 3, Official Methods of AnalysisSM (AOAC),2007, Jr. Editors ».

La présente invention se distingue donc des composés phosphatés de l'art antérieur obtenus notamment par mélange simultané de matière organique brute (non soumise à un pré-traitement ou étape d'activation), de roche phosphatée et d'acide ou du mélange préalable de la roche phosphatée et de la matière organique suivi de l'ajout de l'acide. La mise en oeuvre de ces procédés ne permet pas de conduire à la formation de complexes organo-calcium-phosphate car les groupes fonctionnels complexants des composés présents dans la matière organique ne sont pas libres pour réagir et permettre la formation de ces complexes qui protègent le phosphate de la rétrogradation.

Dans le cadre de l'invention, l'utilisation de matière organique brute, c'est-à-dire telle qu'elle se présente à l'état naturel, nécessite une étape de pré-traitement afin de libérer les groupes fonctionnels complexants des composés organiques et permettre la formation de complexes organo-calcium-phosphate lors de la réaction avec le phosphate insoluble. En effet, ces groupes fonctionnels complexants sont, dans la matière organique à l'état naturel, bloqués par la formation de complexes métalliques ou de liaisons ou interactions inter-groupes, telles que des ponts hydrogènes ou des effets hydrophobes. Ce pré-traitement peut ainsi être qualifié d'étape d'activation de la matière organique brute pour obtenir une source organique complexante, prête à réagir avec la source de phosphate insoluble.

La libération des groupes fonctionnels complexants qui est réalisée lors de l'étape d'activation par destruction des complexes métalliques ou des liaisons inter-fonctionnelles et obtenir au moins 10 % de groupes fonctionnels complexants libres, est effectuée à l'aide d'un acide, minéral ou organique, ou d'un mélange de ces acides.

Parmi les acides qui peuvent être utilisés pour l'activation de la matière organique brute, on peut notamment citer :
- les acides minéraux tels que l'acide sulfurique, l'acide phosphorique l'acide nitrique, l'acide chlorhydrique ou leurs mélanges, de préférence l'acide sulfurique, l'acide phosphorique ou leurs mélanges ;
- les acides organiques tels que l'acide citrique, l'acide oxalique, l'acide acétique, l'acide maléique, l'acide malonique, l'acide succinique, l'acide malique, l'acide fumarique, l'acide tartrique, l'acide pyruvique, l'acide oxaloacétique, l'acide cétogluconique, l'acide butyrique, l'acide propanoïque ou leurs mélanges, de préférence l'acide oxalique, l'acide citrique ou leurs mélanges.

Pour réaliser l'activation de la matière organique brute avant de procéder à la réaction par attaque acide de la source de phosphate insoluble, on peut également par exemple réaliser tout d'abord une suspension de la matière organique dans de l'eau, puis la mélanger avec l'acide (sulfurique, phosphorique, etc).

Au cours de cette étape d'activation de la matière organique brute, la température est généralement comprise entre environ 5 °C et environ 100 °C, de préférence entre environ 10 °C et environ 60 °C, et de préférence encore entre environ 20 °C et environ 40 °C. Par ailleurs, la réaction est pratiquée pendant un minimum de 1 minute, de préférence pendant au moins 5 minutes environ, et de manière particulièrement préférée pendant au moins 15 minutes.

L'étape d'activation conduit à l'obtention d'une matière organique dite « activée » qui contient des composés dont au moins 10 % des groupes fonctionnels complexants sont libres. Ces groupes fonctionnels sont avantageusement choisis parmi les groupes carboxyliques, les groupes phénoliques et les groupes hydroxyliques. De préférence, les composés obtenus contiennent au moins 30 % de groupes fonctionnels complexants libres.

Après activation et avant de procéder à la réaction par attaque acide de la source de phosphate insoluble, la matière organique pourra donc se présenter sous forme liquide, par exemple sous la forme d'une solution ou d'une suspension contenant la matière organique et le solvant d'activation, ou bien sous forme solide si on sèche par exemple la matière organique une fois « activée ».

Lorsque la source organique utilisée pour mettre en oeuvre l'invention n'est pas de la matière organique brute, mais consiste en des composés organiques qui ont été extraits d'une matière organique brute et dont au moins 10 %, et de préférence au moins 30 % des groupes fonctionnels complexants sont déjà libres, l'étape d'activation préalable de la source organique utilisée pour préparer les composés phosphatés selon l'invention n'est dans ce cas pas nécessaire puisque les groupes fonctionnels complexants sont déjà libres.

Ainsi, selon un second aspect, l'invention a pour objet un procédé de préparation de composés phosphatés comprenant la réaction de :
(i) 40% à 60% en poids, de préférence de 40% à 55% en poids, de roches phosphatées,
(ii) 30% à 60% en poids, de préférence 37% à 58% en poids, d'acide minéral ou organique, et
(iii) 0,2% à 10% en poids, de préférence 2% à 8% en poids, de composés organiques extraits de la lignite, la léonardite, la tourbe, de composts végétaux, de lignosulfonates contenant des cations monovalents ou d'algues, et qui possèdent au moins 10%, de préférence au moins 30% de groupes fonctionnels complexants libres, la somme de (i), (ii) et (iii) étant égale à 100%.

Par exemple, des composés qui contiennent environ 30 % de groupes carboxyliques, 15 % de groupes phénoliques et 10 % de groupes alcooliques (ou hydroxyliques) peuvent être utilisés pour la mise en oeuvre de l'invention.

Des composés organiques de ce type peuvent être disponibles dans le commerce, comme par exemple des humates de potassium ou de sodium commercialisés sous la dénomination Fortehum®, ou des lignosulfonates à cations monovalents commercialisés sous la dénomination Novibond® ou Borresperse® ; de tels produits contiennent au moins 70 % de groupes fonctionels complexants libres.

Par conséquent, l'utilisation de toute source organique, principalement d'origine végétale, brute ou non, qui contient des composés qui possèdent au moins 10 % de groupes fonctionnels complexants aptes à former des complexes avec les métaux, peut être utilisée pour préparer les composés phosphatés de la présente invention.

Les lignosulfonates ou lignine sulfonatée (ou sulfonée) (N° CAS 8062-15-5) sont des polymères polyélectrolytes anioniques hydrosolubles qui sont des sous-produits issus de la production de la pâte de bois qui utilise de la pâte au bisulfite.

Concernant l'utilisation de lignosulfonates, l'étape d'activation sera ou non mise en oeuvre en fonction de la nature exacte de ces composés. En effet, l'étape d'activation n'est pas nécessaire pour les lignosulfonates dont les groupes complexants sont libres, à savoir les lignosulfonates à cations monovalents comme par exemple les sels inorganiques de sodium, potassium, ammonium alors que l'utilisation des autres types de lignosulfonates, comme par exemple les sels inorganiques de calcium ou de fer, nécessitera de mettre en oeuvre une étape d'activation préalablement à la réaction avec le phosphate insoluble.

Les algues qui peuvent être utilisées en tant que source organique dans le procédé de l'invention sont notamment les algues de type Phéophycées, Rhodophycées ou Chlorophycées, dont la biomasse disponible est largement accessible. Ces algues peuvent etre utilisées sous forme de poudre sèche obtenue après séchage et broyage d'algues préalablement séchées, sous forme de pâte humide obtenue après broyage, micro-broyage et/ou micro-éclatage d'algues fraîches, et/ou sous forme d'extrait aqueux obtenu par hydrolyse basique ou acide d'algues, sèches ou fraîches ; cette étape d'hydrolyse étant réalisée en présence ou en l'absence d'agents complexants, permet de libérer les groupes fonctionnels complexants de la matière organique d'origine algale.

De préférence, la source organique utilisée dans le cadre de la présente invention est d'origine végétale.

Les sources organiques les plus ordinaires telles que la tourbe, la léonardite, la lignite et les composts végétaux sont de préférence utilisées dans le cadre de la présente invention, que ce soit à l'état brut (premier aspect) ou en tant que matière organique de laquelle sont extraits les composés organiques dont les groupes fonctionnels complexants sont libres (second aspect). Ces matières organiques sont particulièrement préférées en tant que source organique en général car elles sont notamment riches en substances humiques, et en particulier en acides humiques. Ainsi, on utilisera de préférence de la matière organique brute de laquelle sont extraits les composés organiques utilisés qui contient au moins 5 % de substances humiques, de préférence au moins 10 % de substances humiques et de manière particulièrement préférée au moins 40 % d'acides humiques (pourcentages exprimés en matière sèche).

La source organique préférée selon l'invention est la tourbe.

Ces matières organiques peuvent être utilisées brutes dans le cadre de l'invention, et devront dans ce cas subir l'étape d'activation avant d'être utilisées pour préparer les composés phosphatés de l'invention (premier aspect). Ainsi, selon un mode de réalisation particulièrement avantageux de la présente invention, on utilise de la tourbe à l'état brut en tant que source organique naturelle contenant des substances humiques, et en particulier des acides humiques.

Des substances humiques extraites de ces matières organiques peuvent également être utilisées sans nécessité d'une activation préalable à leur utilisation dans la réaction objet de la présente invention, du moment que le procédé d'extraction conduit à la libération des groupes fonctionnels complexants présents dans les substances humiques (second aspect). Les substances humiques peuvent notamment être extraites et éventuellement purifiées par des procédés bien connus de l'homme du métier (Stevenson, 1994, Humus Chemistry, Deuxième Edition, Wiley, New York).

Les substances humiques (SH) sont des polymères pigmentés qui constituent les éléments principaux de l'humus qui représente la matière organique naturelle du sol (MOS), de l'eau et des dépôts organiques géologiques tels que les sédiments des lacs, les tourbes, les lignites et les schistes. Elles sont en grande partie responsables de la couleur brune des débris des plantes décomposées et contribuent également à la couleur brun noir de la surface des sols. Les SH sont donc des composants très importants du sol car elles affectent ses propriétés physiques et chimiques et augmentent la fertilité du sol. Dans les systèmes aqueux, tels que les rivières, environ 50 % des matières organiques dissoutes sont des SH qui affectent le pH et l'alcalinité.

Les SH sont des mélanges complexes et hétérogènes de matériaux polydispersés formés par des réactions chimiques et biochimiques au cours de la décomposition et la transformation des plantes et des restes microbiens, qui résultent d'un procédé connu sous le nom d'humification. La lignine des plantes et ses produits de transformation, ainsi que les polysaccharides, la mélanine, la cutine, les protéines, les lipides, les acides nucléiques, les fines particules de résidus de carbonisation, sont des composés importants qui participent à ce procédé d'humification.

De composition hétérogène et complexe, ces substances peuvent être subdivisées en trois principales fractions, les acides humiques (AH ou AHs), les acides fulviques (AF ou AFs) et l'humine, et en sous-fractions (acide glucique, acide ulmique, acide apocrénique, acide hymatomelanique etc) en fonction de différents critères tels que leur acidité, leur couleur, leur solubilité, etc.

Le schéma suivant est une représentation des propriétés physico-chimiques des substances humiques selon Stevenson, F.J., 1994. Humus Chemistry, Deuxième Edition, Wiley, New York.

**Substances humiques**

| Acides fulviques | | Acides humiques | | Humine |
|---|---|---|---|---|
| Jaune clair | Brun jaune | Brun foncé | Gris-noir | Noir |
| - | augmentation de l'intensité de couleur | | | → |
| - | augmentation du degré de polymérisation | | | → |
| 2000 - | augmentation du poids moléculaire | | | - 300 000 → |
| 45 % - | augmentation du contenu en carbone | | | - 62 % → |
| 48 % - | diminution du contenu en oxygène | | | - 30 % → |
| 1400 - | diminution en échange d'acidité | | | - 500 → |
| - | diminution du degré de solubilité | | | → |

Les SH contiennent des groupes aromatiques et polyaromatiques (y compris des hétéroatomes) et des liaisons doubles C=C conjugées dans des résidus aliphatiques, des groupes acides, principalement des groupes phénoliques et carboxyliques, des carbonyles et des sucres. Elles contiennent également des radicaux libres stables. Le poids moléculaire des SH est compris entre 2 000 et 300 000 Daltons.

La distribution des principaux éléments des SH, obtenue par analyse élémentaire, est la suivante : C (35-60 %) ; O (30-50 %) ; H (3-8 %) ; N (0,3-4 %) ; S (0,1-4 %). La distribution des groupes fonctionnels et domaines structurels analysée par RMN-¹³C et exprimée en % de carbone total est la suivante : aliphatiques insaturés (5-50 %) ; N-alkyl methoxyl (0,5-15 %) ; glucides (10-50 %) ; aromatiques (5-50 %) ; carboxyliques (5-30 %) ; cétoniques (1-15 %) ; phénol (3-10 %).

Si la structure et les propriétés précises d'un échantillon donné de SH dépend de la source du sol et de l'eau et des conditions spécifiques d'extraction, les propriétés moyennes des AH, AF et de l'humine d'origines différentes sont néanmoins remarquablement similaires.

Les SH peuvent être extraites des matières organiques (tourbe, léonardite, sols, composts de déchets animaux et végétaux...) à l'aide d'un agent alcalin tel que l'hydroxyde de sodium (NaOH) ou l'hydroxyde de potassium (KOH). L'extrait organique alcalin ainsi obtenu peut ensuite être séparé par acidification en AH (solubles dans l'eau à pH alcalin mais insoluble à pH acide), en AF (solubles dans l'eau quelles que soient les valeurs de pH), et en humine (résidu insoluble dans l'eau quel que soit le pH). En effet, contrairement aux AF, les AH précipitent suite à l'ajout d'un acide fort (par exemple ajusté à pH 1 avec HCl). L'humine ne peut pas être extraite, ni avec une base forte, ni avec un acide fort. Les AH peuvent aussi être à nouveau séparés en AH gris (insoluble à pH neutre et force ionique supérieure à 1 M) et AH bruns (soluble à pH neutre et force ionique supérieure à 1 M).

Les SH aquatiques contiennent uniquement des AH et des AF et ces composés sont généralement éliminés de l'eau par diminution du pH à 2 et adsorption de ces composés sur une colonne de résine appropriée, comme par exemple une résine adsorbante de nature polymérique commercialisée sous la dénomination Amberlite® XAD. Les AH et AF sont extraits de la résine avec une base forte, puis le pH est diminué jusqu'à 1 pour précipiter les AH. La séparation par colonne de résine (par exemple une résine adsorbante de nature polymérique du type XAD) est également utilisée pour séparer les AF à partir de matériel non-humique extrait des sols tels que les acides aminés, les peptides, les sucres, etc. A pH acide (3-4), les AF s'adsorbent sur la résine alors que le matériel non-humique passe à travers la colonne.

En plus de ces SH d'origine naturelle, on peut également utiliser des SH de synthèse (acides humiques, acides fulviques, substances humiques oxydées tels que les acides oxy-humiques et oxy-fulviques, etc). Par ailleurs, les substances humiques peuvent provenir d'un procédé de synthèse (Hanninen et al., 1987, The Science of the Total Environment, 62, 201-210) ou de transformation de substances humiques naturelles, notamment par hémisynthèse. Ces différentes SH peuvent être utilisées individuellement ou bien sous formes de mélanges de plusieurs types de SH.

N'importe laquelle des fractions des substances humiques peut être utilisée dans le cadre de l'invention. De préférence, on utilise des acides humiques et/ou des acides fulviques, et de manière encore plus préférée uniquement des acides humiques. La source organique utilisée pour préparer les composés phosphatés selon l'invention peut en particulier comprendre la fraction brune et/ou grise des acides humiques.

Pour préparer les composés phosphatés selon l'invention, la source de phosphate insoluble peut être tout produit, de préférence d'origine naturelle, contenant du phosphate insoluble, tels que des roches phosphatées (*i.e.* apatite, struvite, vivianite ou phosphates de synthèse correspondants), des co-produits d'origine animale (généralement des farines animales issues des carcasses), des co-produits formés lors de la synthèse des polyphosphates tels que des phosphates métalliques et des cendres de matières animales ou végétales. Les roches phosphatées constituent une source de phosphate insoluble préférée.

De préférence, les roches de phosphate ou le matériel phosphaté de départ est broyé avant d'être incorporé à la réaction. La taille des particules issues du broyage n'est pas une caractéristique limitative pour la mise en oeuvre de l'invention. L'utilisation de particules dont 80 % possèdent une taille moyenne inférieure à 100 microns est cependant particulièrement avantageuse dans le cadre de la présente invention.

La réaction par attaque acide de la source de phosphate insoluble avec la source organique s'effectue éventuellement en présence d'un acide minéral ou organique. En effet, si l'on utilise comme source organique une matière organique brute qui est préalablement activée par un acide, il n'est pas nécessaire d'ajouter à nouveau de l'acide pour pouvoir réaliser l'attaque acide de la source de phosphate insoluble. Dans tous les cas, l'homme du métier saura si la présence d'un acide est à nouveau nécessaire ou non pour procéder à l'attaque acide de la source de phosphate insoluble, et adapter les conditions requises en conséquence, comme décrit notamment dans « The Fertilizer Manual», KLUWER Academic Publisher, 1998.

En effet, dans le domaine de la préparation des composés phosphatés selon l'invention, il est bien connu qu'il est nécessaire de respecter une quantité réactionnelle d'acide pour pouvoir procéder à une attaque acide de la source de phosphate insoluble.

A cet effet, la quantité totale d'acide présente pour procéder à l'attaque acide de la source de phosphate insoluble, qui est apportée à la fois par la matière organique et notamment l'acidité résiduelle suite à l'activation préalable de celle-ci, et par l'acide libre éventuellement ajouté, est calculée directement en fonction de la quantité de phosphate insoluble apportée, cette dernière étant notamment basée sur son titre exprimé en P₂O₅. Ainsi, l'homme du métier sait déterminer la nécessité et la quantité d'acide requise pour être dans le rapport de la réaction d'attaque acide et pour respecter les caractéristiques techniques finales d'un engrais phosphatés marchand, qui sont notamment entre 16 % et 22 % de P₂O₅ soluble H₂O pour un superphosphate simple et entre 40 % et 48 % de P₂O₅ soluble H₂O pour un superphosphate triple.

Par exemple, pour la fabrication d'un superphosphate simple (en poudre et ou granulé), le rapport entre la quantité de phosphate insoluble pour un titre en P₂O₅ de 33 % et l'acide sulfurique est de environ 1,60 :

| | |
|---|---|
| Roches phosphatées (33 % P₂O₅) | 626 kg |
| Acide sulfurique (96 %) | 390 kg |

Néanmoins, il n'est pas non plus exclu d'ajouter à nouveau de l'acide pour attaquer la source de phosphate insoluble. Dans ce cas, on peut ajouter le même acide ou mélange d'acides que celui qui a été utilisé pour l'activation de la source organique ou bien un acide ou mélange d'acides différent(s) de celui qui a été utilisé pour l'activation de la source organique.

En revanche, si l'on n'utilise pas comme source organique une matière organique brute activée par un acide, il sera nécessaire de rajouter de l'acide pour pouvoir réaliser l'attaque acide de la source de phosphate insoluble, comme décrit ci-dessus.

Les acides qui peuvent être utilisés pour l'attaque acide de la source de phosphate insoluble pour préparer les composés phosphatées selon l'invention sont les mêmes que ceux qui peuvent être utilisés pour activer le cas échéant la source organique, c'est-à-dire lorsque celle-ci est utilisée à l'état brut, c'est-à-dire directement à l'état naturel.

En tant qu'acide minéral qu'il est possible d'utiliser pour préparer les composés phosphatés selon l'invention, on peut citer par exemple l'acide sulfurique, phosphorique, nitrique, chlorhydrique ou leurs mélanges, de préférence l'acide sulfurique, l'acide phosphorique ou leurs mélanges.

Parmi les acides organiques qui peuvent être utilisés dans le procédé de préparation des composés phosphatés selon l'invention, on peut également citer par exemple l'acide citrique, oxalique, acétique, maléique, malonique, succinique, malique, fumarique, tartrique, pyruvique, oxaloacétique, cétogluconique, butyrique, propanoïque ou leurs mélanges, de préférence l'acide oxalique, l'acide citrique ou leurs mélanges.

La température et la pression au cours de la réaction d'attaque de la source de phosphate insoluble ne représentent pas des paramètres limitants, bien que la réaction soit habituellement réalisée à une température comprise entre la température ambiante (environ 20 à 25 °C) et environ 120 °C, et à la pression atmosphérique. Par ailleurs, la réaction est généralement pratiquée pendant une durée de environ 1 min à environ 60 min, de préférence de environ 5 min à 45 min environ, et de manière particulièrement préférée de environ 15 min à environ 30 min.

Les ingrédients qui sont utilisés lors de l'activation préalable de la source organique utilisée à l'état brut pour préparer les composés phosphatés selon l'invention sont mis en oeuvre dans les quantités suivantes :
- de 70 % à 98 % en poids d'acide minéral ou organique, de préférence de 80 % à 95 % en poids,
- de 1 % à 30 % en poids de source organique, de préférence de 5 % à 20 % en poids, (étant entendu que la somme de ces ingrédients est égale à 100 %).

Les titres des acides minéraux et organiques utilisés pour préparer les composés phosphatés selon l'invention, et en particulier comme décrit ci-dessus, sont toujours de qualités techniques, non purifiés, soit par exemple pour l'acide sulfurique de 78 % à 93 % de pureté, ou pour l'acide phosphorique de 75 % à 85 % de pureté.

Lors de l'attaque acide de la source de phosphate insoluble, les ingrédients qui sont utilisés pour préparer les composés phosphatés selon l'invention sont mis en oeuvre dans les quantités suivantes :
- de 30 % à 50 % en poids de phosphate insoluble, de préférence de roches phosphatées, de préférence de 35 % à 45 % en poids, et
- de 50 % à 70 % en poids de matière organique brute activée par un acide, de préférence de 55 % à 65 % en poids, (étant entendu que la somme de ces ingrédients est égale à 100 %).

Les ingrédients qui sont utilisés lors de la réaction de préparation des composés phosphatés selon le second aspect de l'invention sont mis en oeuvre dans les quantités suivantes :
- de 40 % à 60 % en poids de roches phosphatées broyées, de préférence de 40 % à 55 % en poids ,
- de 30 % à 60 % en poids d'acide minéral ou organique, en particulier d'acide sulfurique ou phosphorique, de préférence de 37 % à 58 % en poids, et
- de 0,2 % à 10 % en poids de source organique, de préférence de 2 % à 8 % en poids, (étant entendu que la somme de ces ingrédients est égale à 100 %).

De préférence, les composés selon l'invention sont obtenus (i) soit en faisant réagir des roches phosphatées avec de la tourbe brute préalablement activée avec de l'acide sulfurique ou phosphorique, (ii) soit en faisant réagir des roches phosphatées avec de l'acide sulfurique ou phosphorique en présence d'acides humiques extraits de léonardite ou de tourbe.

La présente invention sera de préférence mise en oeuvre en l'absence de composés qui pourraient empêcher la formation de complexes organo-calcium-phosphate stables, comme par exemple, des composés qui possèdent au moins une fonction amine libre ou leurs analogues, qui sont capables de conduire par exemple à la formation d'amides ou de ponts ou liaisons avec les fonctions carboxyliques de la matière organique. Si de tels composés étaient néanmoins présents lors de la mise en oeuvre du procédé selon l'invention, leur quantité devra être inférieure à 5 % en poids rapporté au poids de matière sèche organique. En tout état de cause, le contenu en composés aminés ou analogues doit être inférieur, et non égal, au contenu en groupes carboxyliques dans le produit final.

La concentration en matières organiques présentes dans le produit final obtenu n'est pas une caractéristique limitative, mais de manière préférée cette concentration est comprise entre 2,5 et 25 %.

Selon un troisième aspect, l'invention a pour objet l'utilisation d'un ou de plusieurs composés phosphatés qui sont obtenus selon le procédé décrit précédemment en tant qu'engrais.

Suite à la mise en oeuvre du procédé, les composés phosphatés se présentent sous la forme d'une poudre. Cependant, pour leur conditionnement et/ou leur utilisation, les composés phosphatés issus de la réaction peuvent être présentés sous la forme de poudre, granulés ou pastilles par des procédés de formulation bien connus dans le domaine.

La quantité de composés phosphatés selon l'invention à appliquer sur le sol varie en fonction du type de sols et de cultures, et de la forme sous laquelle se présentent ces composés.

Par exemple, des composés contenant 16 à 18 % de P₂O₅ soluble dans l'eau et se présentant sous la forme de poudre ou de granulés seront appliqués dans une gamme allant de 100 à 500 kg/hectare. L'homme du métier saura bien entendu adapter ces paramètres pour utiliser les composés selon l'invention.

Les composés phosphatés issus de la réaction selon l'invention peuvent être utilisés seuls ou mélangés à une autre composition d'engrais. Dans ce dernier cas, ils peuvent notamment être utilisés en tant qu'ingrédients d'une composition d'engrais plus complexe contenant différents nutriments (azote, potassium, phosphore, magnésium, calcium et oligo-éléments, comme par exemple dans des engrais azotés (N), phosphatés (P), potassiques (K), azotés-phosphatés (NP), azotés-potassiques (NK) et azotés-phosphatés-potassiques (NPK).

Par exemple, les composés phosphatés selon l'invention peuvent être utilisés en mélange avec un engrais NPK de composition 8 % N, 15 % P, 15 % K, 2 % MgO, 0,1 % Cu et 0,1 % Fe.

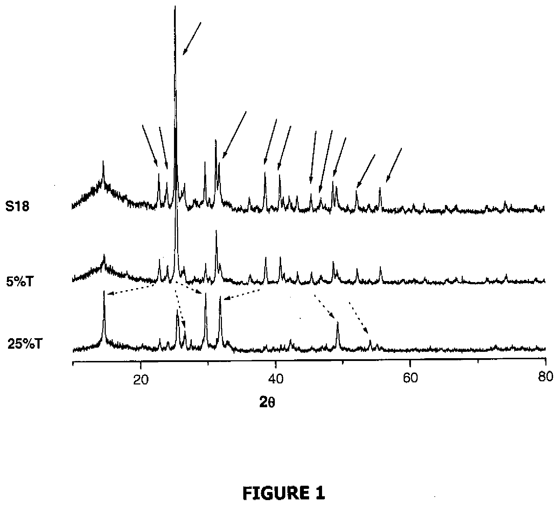

L'obtention des composés phosphatés selon l'invention sera décrite plus en détails dans les exemples qui suivent et qui se réfèrent à la **figure 1** annexée qui représente la comparaison de l'analyse de la diffraction des rayons X obtenue avec des composés (S18), qui sont des superphosphates de l'art antérieur, et avec les composés phosphatés (T) conformes à l'invention, comprenant de 5 % à 25 % de matières organiques.

### EXEMPLES

### Exemple 1 - production de superphosphates simples selon l'invention

### Pré-traitement ou activation de la matière organique :

Une suspension a été préparée avec 85 % en poids d'acide sulfurique (à 70 %) (Asturiana de Zinc, Espagne), et 15 % en poids de tourbe noire (30 % d'humidité) (Tolsa, Espagne). Cette suspension est maintenue sous agitation constante pendant 15 minutes à température ambiante (entre 20 et 35°C) avant de réaliser la réaction d'attaque du phosphate insoluble. La tourbe noire utilisée comprend environ 45% (pourcentage exprimé en matière sèche) de groupes fonctionnels complexants (groupes carboxyliques, phénoliques et hydroxyliques). Après activation par l'acide sulfurique, la tourbe comprend environ 36% de groupes fonctionnels complexants libres.

### Attique du phosphate insoluble :

Ensuite, la réaction avec la source de phosphate insoluble a été effectuée en mélangeant pendant environ 30 s à 100°C, dans un réacteur Kuhlman pour une réaction en continue, 100 kg de roches phosphatées (en provenance du Maroc) préalablement broyées (80 % < 100 microns) avec 100 kg de la suspension obtenue précédemment (contenant l'acide sulfurique et la tourbe noire). Le produit obtenu a été placé dans une cuve où la réaction se poursuit pendant environ 25 min, puis le produit est stocké.

### Exemple 2 - production de superphosphates triples selon l'invention

### Pré-traitement ou activation de la matière organique :

Une suspension a été préparée en mélangeant 92% (poids/poids) d'acide phosphorique (54% P₂O₅) (Fertiberia, Espagne) et 8 %(poids/poids) de tourbe noire identique à celle utilisée à l'exemple 1 (30 % d'humidité) (Tolsa, Espagne). Cette suspension est maintenue sous agitation constante pendant 15 minutes à température ambiante (entre 20 et 35°C) avant de réaliser la réaction d'attaque du phosphate insoluble.

### Attaque du phosphate insoluble :

Ensuite, la réaction avec la source de phosphate insoluble a été effectuée en mélangeant pendant environ 30 s dans un réacteur Kuhlman pour une réaction en continue, 100 kg de roches phosphatées (en provenance du Maroc) préalablement broyées (80 % < 100 microns) avec 125 kg de la suspension préparée comme décrit ci-dessus (contenant l'acide phosphorique et la tourbe noire). Le produit obtenu a été placé dans une cuve où la réaction se poursuit pendant environ 25 min, puis le produit est stocké.

### Exemple 3 - production de superphosphates simples selon l'invention

### Pré-traitement ou activation de la matière organigue :

Une suspension a été préparée en mélangeant 85 % (poids/poids) d'acide sulfurique (à 70 %) (Asturiana de Zinc, Espagne) et 15 % (poids/poids) de lignosulfonate de calcium (Novibond®). Cette suspension est maintenue sous agitation constante pendant 15 minutes à température ambiante (entre 20 et 35°C) avant de réaliser la réaction d'attaque du phosphate insoluble. Après activation avec l'acide sulfurique, le lignosulfonate de calcium comprend environ 90% de groupes fonctionnels complexants libres.

### Attaque du phosphate insoluble :

Ensuite, la réaction avec la source de phosphate insoluble a été effectuée en mélangeant pendant environ 30 s, dans un réacteur Kuhlman pour une réaction en continue, 100 kg de roches phosphatées (en provenance du Maroc) préalablement broyées (80 % < 100 microns) avec 100 kg de la suspension obtenue précédemment (contenant l'acide sulfurique et le lignosulfonate de calcium). Le produit obtenu a été placé dans une cuve où la réaction se poursuit pendant environ 25 min, puis le produit est stocké.

### Exemple 4 - production de superphosphates simples selon l'invention

### Attaque du phosphate insoluble :

La réaction avec la source de phosphate insoluble a été effectuée en mélangeant pendant environ 30 s, dans un réacteur Kuhlman pour une réaction en continue, 100 kg de roches phosphatées (en provenance du Maroc) préalablement broyées (80 % < 100 microns) avec 85 kg d'acide sulfurique (à 70 %) (Asturiana de Zinc, Espagne), et 10 kg d'acides humiques préalablement extraits à partir de 30 kg de léonardite (Luengo, Espagne) à l'aide de 100 kg d'une solution de soude à 5% pendant 2 h. Les acides humiques ont ensuite été extraits par acidification du mélange réactionnel ; ces acides humiques comprennent au moins 90% de groupes fonctionnels complexants libres.

Le produit obtenu a été placé dans une cuve où la réaction se poursuit pendant environ 25 min, puis le produit est stocké.

### Exemple 5 - mise en évidence de la formation de complexes organo-calcium-phosphate dans les composés phosphatés selon l'invention

Différents composés phosphatés ont été synthétisés :
- **(T)** : composés phosphatés préparés conformément à l'invention selon l'exemple 1 ;
- **(P)** : composés phosphatés préparés selon le protocole suivant : 100 kg de roches phosphatée (en provenance du Maroc) préalablement broyées (80 % < 100 microns), 85 kg d'acide sulfurique (à 70 %) (Asturiana de Zinc, Espagne) et 15 kg de tourbe sont mélangés simultanément dans un réacteur Kuhlman pour une réaction en continue pendant 30 secondes et sous une agitation forte, à une température d'environ 100 °C ;
- **(M) :** composé superphosphate S18 mélangé à de la tourbe dans une proportion S18 :tourbe de 97,5 :2,5 par simple mélange. Le superphosphate S18 est obtenu en mélangeant simultanément 100 kg de roches phosphatées (en provenance du Maroc) préalablement broyées (80 % < 100 microns) et 85 kg d'acide sulfurique (à 70 %) (Asturiana de Zinc, Espagne) dans un réacteur Kuhlman pour une réaction en continue pendant 30 secondes et sous une agitation forte, à une température d'environ 100 °C ;
- **(S18) :** composé superphosphate S18.

La formation des complexes organo-calcium-phosphate est suivie par RMN-¹³P pour chacun des composés phosphatés synthétisés ci-dessus (T), (P), (M) et (S18), selon la technique décrite par Riggle et Von Wandruszka, Talanta, 2007, 73, 953-958. Ce suivi est basé sur le fait que la formation de ce type de complexe affecte la largeur du pic qui correspond au phosphate inorganique du fait de l'occupation sites coordonnés de phosphate par le cation.

Les résultats sont regroupés dans le **Tableau 1** ci-dessous et démontrent clairement que la formation de complexes organo-calcium-phosphate se produit uniquement lorsque les composés phosphatés sont obtenus conformément à l'invention et que dans les conditions qui correspondent aux procédés de l'art antérieur notamment ne permettent pas la formation de ces complexes.

**Tableau 1**

| Produit | Δ largeur du pic / phosphate inorganique ΔHz (1/2 haut) |
|---|---|
| T | 88 |
| P | 0 |
| M | 0 |
| S18 | 0 |

| | |
|---|---|
| (ΔHz (1/2 haut) représente la demi-hauteur du pic). | |

### Exemple 6 - effet des composés Phosphatés sur la biodisponibilité du phosphate

La biodisponibilité du phosphate dans le sol a été mesurée suite à l'utilisation de chacun des composés phosphatés préparés comme indiqué à l'Exemple 5 ci-dessus.

On a ajouté et mélangé, dans des pots en plastique distincts de 300 mL contenant 150 g de sol calcaire, chacun des composés (T, P, M, S18), à raison de 250 mg de Phosphore par kg de sol. A titre de témoin, on a utilisé un pot en plastique de 300 mL contenant 150 g de sol calcaire non traité.

Les échantillons de sol traités ont été homogénéisés et on y a ajouté de l'eau désionisée de type I afin afin d'atteindre la capacité au champ (càd la capacité de rétention maximale en eau du sol), déterminée au préalable sur une colonne de sol calcaire humidifié, que l'on a laissé suinter librement. On a fermé les pots hermétiquement et on les a maintenu à la température ambiante dans l'obscurité pendant 90 jours. On a prélevé trois échantillons par pot 20, 30, 60 et 90 jours après le début de l'expérience, et on les a fait sécher avant analyse. La biodisponibilité en phosphate du sol est déterminée selon la méthode Olsen qui est une méthode classiquement utilisée pour évaluer le degré de biodisponibilité du phosphate dans les sols (Rowell D.L., Longman, UK, 1994, Soil Science, Methods and Applications*).*

Les résultats sont regroupés dans le **Tableau 2** ci-dessous et démontrent clairement l'effet bénéfique que procurent les composés phosphatés préparés conformément à la présente invention sur la biodisponibilité du phosphate dans le sol par rapport aux composés préparés dans l'art antérieur.

**Tableau 2**

| Produit | P du sol (mg kg⁻¹) |
|---|---|
| T | 91 |
| P | 42 |
| M | 26 |
| S18 | 45 |

### Exemple 7 - effet des composés phosphatés pour la fertilisation phosphatée

On a étudié l'effet des composés de l'invention sur une végétation en pot, semée en sol argilo-calcaire déficitaire en P₂O₅.

Pour ce faire, on a rempli 20 pots de 5 litres avec du sol argilo--calcaire déficitaire en P₂O₅ (argile : 38,4 % - calcaire : 14,1 % ; pouvoir fixateur élevé sur le P₂O₅ ; teneur faible en Phosphore Joret : 69 ppm (pour une norme à 90) et en Phosphore Olsen : 4 ppm (pour une norme à 40)).

On a incorporé dans 8 pots des composés phosphatés préparés conformément à l'invention selon l'exemple 1 **(T),** à une dose équivalente à 160 U/ha, dans 8 autres pots le composé superphosphate S18 **(S18)** à la même dose, les 4 pots restant servant de témoin. Puis on a semé dans chacun des pots 5g de Ray Grass italien (*Lolium multitlorum*), on a attendu que les plantes lèvent (au bout de 5 jours environ), on a alors mis les pots en serre et on y a ajouté une solution azotée équivalant à 50U/ha.

Trois semaines après la mise en serre, on a effectué une première coupe et on ajouté aux plantes coupées une solution azotée équivalant à 100U/ha. 16 jours après la première coupe, on a effectué une seconde coupe et on ajouté aux plantes coupées une solution azotée équivalant à 200U/ha. 4 jours après le seconde coupe, on a effectué une troisième coupe et on a ajouté aux plantes coupées une solution azotée équivalant à 200U/ha. Une dernière coupe a été effectuée 16 jours après.

On a pesé la production en matières fraîches (MF) et en matières sèches (MS) après chaque coupe. Les résultats sont présentés dans les tableaux 3 et 4 ci-dessous.

**Tableau 3**

| | Production cumulée MF g/pot | | | |
|---|---|---|---|---|
| | Coupe 1 | Coupe 1 + 2 | Coupe 1 + 2 + 3 | Coupe 1 + 2 + 3 + 4 |
| Témoin* | 12,38 | 19,95 | 23,72 | 28,54 |
| S18** | 15,48 | 47,30 | 56,67 | 64,98 |
| T** | 14,05 | 44,38 | 58,12 | 72,06 |

| | | | | |
|---|---|---|---|---|
| * moyenne sur 4 pots ** moyenne sur 8 pots | | | | |

**Tableau 4**

| | Production cumulée MS g/pot | | | |
|---|---|---|---|---|
| | Coupe 1 | Coupe 1 + 2 | Coupe 1 + 2 + 3 | Coupe 1 + 2 + 3 + 4 |
| Témoin* | 1,81 | 3,16 | 4,13 | 5,21 |
| S18** | 2,14 | 7,00 | 8,72 | 10,68 |
| T** | 1,96 | 6,50 | 8,71 | 11,53 |

| | | | | |
|---|---|---|---|---|
| * moyenne sur 4 pots ** moyenne sur 8 pots | | | | |

Comme on peut le constater à la lecture des tableaux 3 et 4, sur 4 coupes, les composés selon l'invention produisent 10,9 % de plus de MF, et 7,9 % de plus de MS, que le traitement S18. L'effet se déclare après la seconde coupe ; en base 100 de S18, la production de MS pour les pots traités avec les composés de l'invention est de 128% (p<0.05) à la troisième coupe et de 144% (p<0.05) à la quatrième coupe.

## Revendications

1. Procédé de préparation de composés phosphatés comprenant les étapes suivantes :
a) activation d'une matière organique brute choisie parmi la lignite, la léonardite, la tourbe, les composts végétaux, les lignosulfonates ne contenant pas de cations monovalents et les algues, ladite activation étant réalisée par réaction de :
(i) 70% à 98% en poids, de préférence 80% à 95% en poids, d'acide minéral ou organique, avec
(ii) 2% à 30% en poids, de préférence environ 5% à environ 20% en poids de matière organique brute, la somme de (i) et (ii) étant égale à 100%, de façon à libérer au moins 10%, de préférence au moins 30% de groupes fonctionnels complexants présents dans ladite matière organique brute ; et
b) réaction de
(i) 30% à 50% en poids, de préférence de environ 35% à environ 45% en poids, d'une source de phosphate insoluble, avec
(ii) 50% à 70% en poids, de préférence environ 55% à environ 65% en poids, de matière organique brute activée par un acide, la somme de (i) et (ii) étant égale à 100%.

2. Procédé selon la revendication 1, dans lequel la matière organique brute est choisie parmi la tourbe, la léonardite, la lignite et les composts végétaux.

3. Procédé selon la revendication 1 ou 2, dans lequel la matière organique brute est la tourbe.

4. Procédé selon l'une quelconque des revendications 1 à 3, dans lequel lesdits groupes fonctionnels complexants sont des groupes carboxyliques, des groupes phénoliques et/ou des groupes hydroxyliques.

5. Procédé selon l'une quelconque des revendications 1 à 4, dans lequel l'acide minéral est choisi parmi l'acide sulfurique, phosphorique, nitrique, chlorhydrique ou leurs mélanges, de préférence l'acide sulfurique, l'acide phosphorique ou leurs mélanges.

6. Procédé selon l'une quelconque des revendications 1 à 4, dans lequel l'acide organique est choisi parmi l'acide citrique, oxalique, acétique, maléique, malonique, succinique, malique, fumarique, tartrique, pyruvique, oxaloacétique, cétogluconique, butyrique, propanoïque ou leurs mélanges, de préférence l'acide oxalique, l'acide citrique ou leurs mélanges.

7. Procédé selon l'une quelconque des revendications 1 à 6, dans lequel la source de phosphate insoluble est choisie parmi les roches phosphatées, les co-produits d'origine animale, les co-produits formés lors de la synthèse des polyphosphates tels que les phosphates métalliques et les cendres de matières animales ou végétales.

8. Procédé selon la revendication 7, dans lequel la source de phosphate insoluble est constituée de roches phosphatées.

9. Procédé selon l'une quelconque des revendications 1 à 8, qui est mis en oeuvre en l'absence de composés qui possèdent au moins une fonction amine libre ou leurs analogues, qui sont capables de conduire à la formation d'amides ou de ponts ou liaisons avec les fonctions carboxyliques de la matière organique.

10. Procédé de préparation de composés phosphatés comprenant la réaction de :
(i) 40% à 60% en poids, de préférence de 40% à 55% en poids, de roches phosphatées,
(ii) 30% à 60% en poids, de préférence 37% à 58% en poids, d'acide minéral ou organique, et
(iii) 0,2% à 10% en poids, de préférence 2% à 8% en poids, de composés organiques extraits de la lignite, la léonardite, la tourbe, de composts végétaux, de lignosulfonates contenant des cations monovalents ou d'algues, et qui possèdent au moins 10%, de préférence au moins 30% de groupes fonctionnels complexants libres,
la somme de (i), (ii) et (iii) étant égale à 100%.

11. Procédé selon la revendication 10, dans lequel lesdits groupes fonctionnels complexants sont des groupes carboxyliques, des groupes phénoliques et/ou des groupes hydroxyliques.

12. Procédé selon la revendication 10 ou 11, dans lequel l'acide minéral est choisi parmi l'acide sulfurique, phosphorique, nitrique, chlorhydrique ou leurs mélanges, de préférence l'acide sulfurique, l'acide phosphorique ou leurs mélanges.

13. Procédé selon la revendication 10 ou 11, dans lequel l'acide organique est choisi parmi l'acide citrique, oxalique, acétique, maléique, malonique, succinique, malique, fumarique, tartrique, pyruvique, oxaloacétique, cétogluconique, butyrique, propanoïque ou leurs mélanges, de préférence l'acide oxalique, l'acide citrique ou leurs mélanges.

14. Procédé selon l'une des quelconque des revendications 10 à 13, dans lequel la matière organique de laquelle sont extraits les composés organiques utilisés contient au moins 5 %, de préférence au moins 10 %, et de préférence encore au moins 40 % d'acides humiques.

15. Procédé selon l'une quelconque des revendications 10 à 14, qui est mis en oeuvre en l'absence de composés qui possèdent au moins une fonction amine libre ou leurs analogues, qui sont capables de conduire à la formation d'amides ou de ponts ou liaisons avec les fonctions carboxyliques de la matière organique.

## Patentansprüche

1. Verfahren zur Herstellung von Phosphatverbindungen, das die folgenden Schritte umfasst:
a) Aktivierung eines organischen Rohmaterials, ausgewählt aus Lignit, Leonardit, Torf, Pflanzenkompost, Lignosulfonaten, die keine einwertigen Kationen enthalten, und Algen, wobei die Aktivierung vollzogen wird durch Reaktion von:
(i) 70 bis 98 Gew.-%, vorzugsweise 80 bis 95 Gew.-% mineralischer oder organischer Säure mit
(ii) 2 bis 30 Gew.-%, vorzugsweise etwa 5 bis etwa 20 Gew.-% von organischem Rohmaterial, wobei die Summe aus (i) und (ii) gleich 100 % ist,
um wenigstens 10 %, vorzugsweise wenigstens 30 % von komplexierenden, funktionellen Gruppen, die in dem organischen Rohmaterial vorhanden sind, freizusetzen, und
b) Reaktion von:
(i) 30 bis 50 Gew.-%, vorzugsweise etwa 35 bis etwa 45 Gew.-% einer unlöslichen Phosphatquelle mit
(ii) 50 bis 70 Gew.-%, vorzugsweise etwa 55 bis etwa 65 Gew.-% von mit einer Säure aktiviertem organischem Rohmaterial, wobei die Summe aus (i) und (ii) gleich 100 % ist.

2. Verfahren nach Anspruch 1, bei dem das organische Rohmaterial aus Torf, Leonardit, Lignit und Pflanzenkompost ausgewählt ist.

3. Verfahren nach Anspruch 1 oder 2, bei dem das organische Rohmaterial Torf ist.

4. Verfahren nach einem der Ansprüche 1 bis 3, bei dem die komplexierenden, funktionellen Gruppen Carboxylgruppen, Phenolgruppen und/oder Hydroxylgruppen sind.

5. Verfahren nach einem der Ansprüche 1 bis 4, bei dem die mineralische Säure aus Schwefel-, Phosphor-, Salpeter-, Salzsäure oder ihren Mischungen, vorzugsweise Schwefelsäure, Phosphorsäure oder ihren Mischungen ausgewählt ist.

6. Verfahren nach einem der Ansprüche 1 bis 4, bei dem die organische Säure aus Citronen-, Oxal-, Essig-, Malein-, Malon-, Bernstein-, Apfel-, Fumar-, Wein-, Benztrauben-, Oxalessig-, Ketoglukon-, Butter-, Propionsäure oder ihren Mischungen, vorzugsweise Oxalsäure, Citronensäure oder ihren Mischungen ausgewählt ist.

7. Verfahren nach einem der Ansprüche 1 bis 6, bei dem die unlösliche Phosphatquelle aus phosphatischem Gestein, Nebenprodukten tierischen Ursprungs, Nebenprodukten, die bei der Synthese von Polyphosphaten gebildet werden, wie Metallphosphaten, und Asche von tierischen oder pflanzlichen Materialien ausgewählt ist.

8. Verfahren nach Anspruch 7, bei dem die unlösliche Phosphatquelle von phosphatischem Gestein gebildet ist.

9. Verfahren nach einem der Ansprüche 1 bis 8, das in Abwesenheit von Verbindungen, die wenigstens eine freie Aminfunktion oder deren Analoga besitzen, die geeignet sind, zur Bildung von Amiden oder von Brücken oder Bindungen mit den Carboxylfunktionen des organischen Materials zu führen, durchgeführt wird.

10. Verfahren zur Herstellung von Phosphatverbindungen, umfassend die Reaktion von:
(i) 40 bis 60 Gew.-%, vorzugsweise 40 bis 55 Gew.-% phosphatischem Gestein,
(ii) 30 bis 60 Gew.-%, vorzugsweise 37 bis 58 Gew.-% mineralischer oder organischer Säure und
(iii) 0,2 bis 10 Gew.-%, vorzugsweise 2 bis 8 Gew.-% organischer Verbindungen, die aus Lignit, Leonardit, Torf, Pflanzenkompost, Lignosulfonaten, die einwertige Kationen enthalten, und Algen extrahiert sind und die wenigstens 10 %, vorzugsweise wenigstens 30 % freier komplexierender, funktioneller Gruppen enthalten,
wobei die Summe aus (i), (ii) und (iii) gleich 100 % ist.

11. Verfahren nach Anspruch 10, bei dem die komplexierenden, funktionellen Gruppen Carboxylgruppen, Phenolgruppen und/oder Hydroxylgruppen sind.

12. Verfahren nach Anspruch 10 oder 11, bei dem die mineralische Säure aus Schwefel-, Phosphor-, Salpeter-, Salzsäure oder ihren Mischungen, vorzugsweise Schwefelsäure, Phosphorsäure oder ihren Mischungen ausgewählt ist.

13. Verfahren nach Anspruch 10 oder 11, bei dem die organische Säure aus Citronen-, Oxal-, Essig-, Malein-, Malon-, Bernstein-, Apfel-, Fumar-, Wein-, Benztrauben-, Oxalessig-, Ketoglukon-, Butter-, Propionsäure oder ihren Mischungen, vorzugsweise Oxalsäure, Citronensäure oder ihren Mischungen ausgewählt ist.

14. Verfahren nach einem der Ansprüche 10 bis 13, bei dem das organische Material, aus dem die verwendeten organischen Verbindungen extrahiert sind, wenigstens 5 %, vorzugsweise wenigstens 10 % und weiterhin vorzugsweise wenigstens 40 % Huminsäuren enthält.

15. Verfahren nach einem der Ansprüche 10 bis 14, das in Abwesenheit von Verbindungen, die wenigstens eine freie Aminfunktion oder deren Analoga besitzen, die geeignet sind, zur Bildung von Amiden oder von Brücken oder Bindungen mit den Carboxylfunktionen des organischen Materials zu führen, durchgeführt wird.

## Claims

1. A method for preparing phosphate compounds comprising the following steps:
a) activating raw organic matter selected from lignite, leonardite, peat, plant composts, lignosulfonates not containing monovalent cations and algae, wherein the activation is carried out by reacting:
(i) from 70 wt% to 98 wt%, preferably from 80 wt% to 95 wt%, of an organic or inorganic acid, with
(ii) from 2 wt% to 30 wt%, preferably from about 5 wt% to about 20 wt%, of said raw organic matter, wherein the sum of (i) and (ii) is equal to 100%,
so as to free at least 10%, preferably at least 30%, of the complexing functional groups present in said raw organic matter; and
b) reacting
(i) from 30 wt% to 50 wt%, preferably form about 35 wt% to about 45 wt%, of a source of insoluble phosphate, with
(ii) from 50 wt% to 70 wt%, preferably from about 55 wt% to about 65 wt%, of raw raw organic matter activated by an acid, wherein the sum of (i) and (ii) is equal to 100%.

2. The method of claim 1, wherein the raw organic matter is selected from peat, leonardite, lignite and plant composts.

3. The method of claim 1 or claim 2, wherein the raw organic matter is peat.

4. The method of any one of claims 1 to 3, wherein the complexing functional groups are carboxyl groups, phenol groups and/or hydroxyl groups.

5. The method of any one of claims 1 to 4, wherein the inorganic acid is selected from sulphuric acid, phosphoric acid, nitric acid hydrochloric acid and mixtures thereof, preferably from sulphuric acid, phosphoric acid and mixtures thereof.

6. The method of any one of claims 1 to 4, wherein the organic acid is selected from citric acid, oxalic acid, acetic acid, maleic acid, malonic acid, succinic acid, malic acid, fumaric acid, tartaric acid, pyruvic acid, oxaloacetic acid, ketogluconic acid, butyric acid, propanoic acid and mixtures thereof, preferably from oxalic acid, citric acid and mixtures thereof.

7. The method of any one of claims 1 to 6, wherein the source of insoluble phosphate is selected from phosphate rocks, byproducts of animal origin, and byproducts formed during synthesis of polyphosphates such as metal phosphates and ashes of animal or plant matters.

8. The method of claim 7, wherein the source of insoluble phosphate consists of phosphate rocks.

9. The method of any one of claims 1 to 8, which is carried out in the absence of compounds that have at least one free amine function or analogs thereof, which are capable of leading to the formation of amides or of bridges or bonds with the carboxyl functions of the organic matter.

10. A method for preparing phosphate compounds comprising the step of reacting:
(i) from 40 wt% to 60 wt%, preferably from 40 wt% to 55 wt%, of phosphate rocks,
(ii) from 30 wt% to 60 wt%, preferably from 37 wt% to 58 wt%, of an organic or inorganic acid, and
(iii) from 0.2 wt% to 10 wt%, preferably from 2 wt% to 8 wt%, of organic compounds extracted from lignite, from leonardite, from peat, from plant composts, from lignosulfonates containing monovalent cations or from algae, said organic compounds comprising at least 10%, preferably at least 30%, of free complexing functional groups,
wherein the sum of (i), (ii) and (iii) is equal to 100%.

11. The method of claim 10, wherein the complexing functional groups are carboxyl groups, phenol groups and/or hydroxyl groups.

12. The method of claim 10 or claim 11, wherein the inorganic acid is selected from sulphuric acid, phosphoric acid, nitric acid hydrochloric acid and mixtures thereof, preferably from sulphuric acid, phosphoric acid and mixtures thereof.

13. The method of claim 10 or claim 11, wherein the organic acid is selected from citric acid, oxalic acid, acetic acid, maleic acid, malonic acid, succinic acid, malic acid, fumaric acid, tartaric acid, pyruvic acid, oxaloacetic acid, ketogluconic acid, butyric acid, propanoic acid and mixtures thereof, preferably from oxalic acid, citric acid and mixtures thereof.

14. The method of any one of claims 10 to 13, wherein the organic matter from which the organic compounds are extracted contains at least 5%, preferably at least 10%, more preferably at least 40%, of humic acids.

15. The method of any one of claims 10 to 13, which is carried out in the absence of compounds that have at least one free amine function or analogs thereof, which are capable of leading to the formation of amides or of bridges or bonds with the carboxyl functions of the organic matter.
